# EUROPÄISCHE PATENTSCHRIFT

(11) **EP 1 567 782 B1**
(45) Veröffentlichungstag und Bekanntmachung des Hinweises auf die Patenterteilung: **26.03.2008**
(21) Anmeldenummer: 03767462.9
(22) Anmeldetag: 27.11.2003
(51) Int. Cl.: F16D 48/06

(54) **VERFAHREN ZUR ERMITTLUNG DES TASTPUNKTS EINER AUTOMATISIERTEN KUPPLUNG UND VORRICHTUNG HIERZU**
METHOD FOR DETERMINING THE TOUCHING POINT OF AN AUTOMATIC CLUTCH AND DEVICE THEREFOR
PROCEDE PERMETTANT DE DETERMINER LE POINT DE CONTACT D'UN EMBRAYAGE AUTOMATIQUE ET DISPOSITIF CORRESPONDANT

(30) Priorität: 28.11.2002 DE 10255385
(43) Veröffentlichungstag der Anmeldung: 31.08.2005
(60) Teilanmeldung: 06026388.6
(73) Patentinhaber: LuK Lamellen und Kupplungsbau Beteiligungs KG, 77815 Bühl (DE)
(72) Erfinder: REIBOLD, Ekkehard, 77933 Lahr (DE); EGGERT, Thomas, 76131 Karlsruhe (DE); KRO, Sven-Jostein, 77830 Bühlertal (DE); KÜPPER, Klaus, 77815 Bühl (DE); DELL, Heiko, 77830 Bühlertal (DE); HENNEBERGER, Klaus, 77815 Bühl (DE); BAEHR, Markus, 77855 Achern (DE)
(86) Internationale Anmeldenummer: PCT/DE2003/003922
(87) Internationale Veröffentlichungsnummer: WO 2004/048796

(56) Entgegenhaltungen:
- EP-A- 0 872 657
- DE-A- 19 652 244
- US-A- 6 022 295

## Beschreibung

Die vorliegende Erfindung betrifft ein Verfahren zur Ermittlung des Tastpunkts einer automatisierten Kupplung eines einen Antriebsmotor aufweisenden Fahrzeugs. Die Erfindung betrifft darüber hinaus auch eine Vorrichtung zur Durchführung des Verfahrens und eine Vorrichtung zur Überwachung einer Positionsveränderung eines bürstenlosen Elektromotors.

Automatisierte Kupplungen in Fahrzeugen mit einem Antriebsmotor sind bereits bekannt geworden. So ist es beispielsweise möglich, eine automatisierte Kupplung zwischen der Abtriebsseite des Motors und der Eingangsseite eines nachgeschalteten Getriebes vorzusehen, bei dem es sich um ein Handschaltgetriebe, ein automatisiertes Schaltgetriebe oder auch beispielsweise ein Kegelscheibenumschlingungsgetriebe handeln kann.

Eine solche automatisierte Kupplung wird dann über einen Aktuator in der Form beispielsweise eines Elektromotors oder eines hydraulischen Antriebs angesteuert. Über die geschlossene Kupplung wird das vom Motor stammende Abtriebsmoment in das Getriebe eingeleitet, wobei die Kupplung auch als Anfahrelement wirken kann derart, dass sie bei einem Anfahrvorgang des Fahrzeugs bis zum so genannten Tastpunkt geschlossen werden kann, ab dem dann bei einem weiteren Schließen der Kupplung das von dieser übertragbare Kupplungsmoment zum Anfahren des Fahrzeugs ansteigt.

Die Kenntnis des Tastpunkts ist daher einerseits beim Anfahrvorgang von Bedeutung und andererseits auch bei nachfolgenden Gangwechselvorgängen. Das von der Kupplung übertragbare Kupplungsmoment aufgetragen über der Verfahrposition des Kupplungsaktors oder Kupplungsaktuators bestimmt das übertragbare der Kupplung oder auch aufgrund von temperaturveränderungsbedingten Verschiebungen im Antriebsstrang verändert sich die Kupplungskennlinie. Da über den Verfahrweg des Aktuators das dem gewünschten Kupplungsmoment entsprechende Kupplungsmoment eingestellt wird und sich aufgrund der vorstehend geschilderten Gegebenheiten die Kupplungskennlinie verändert, ist es zur Vermeidung von Komforteinbußen erforderlich, den Tastpunkt regelmäßig neu zu adaptieren.

In der DE 196 52 244 A1 ist ein Kraftfahrzeug mit einer Antriebseinheit und einem Getriebe, sowie einem automatisierten Drehmomentübertragungssystem offenbart.

Ausgehend hiervon ist es Aufgabe der vorliegenden Erfindung, ein Verfahren zur Ermittlung des Tastpunkts einer automatisierten Kupplung zu schaffen, die in Verbindung mit einem Antriebsmotor eines Fahrzeugs eingesetzt werden kann. Auch soll eine Vorrichtung zur Durchführung des Verfahrens geschaffen werden.

Die Erfindung schafft nun ein Verfahren zur Ermittlung des Tastpunkts einer automatisierten Kupplung eines einen Antriebsmotor aufweisenden Fahrzeugs, wobei nach dem erfindungsgemäßen Verfahren bei betätigter Fahrzeugbremse und eingelegter Gangstufe die Kupplung zunächst geöffnet wird, so dass sich ein negatives Kupplungsmoment einstellt und dann das Motormoment des Antriebsmotors bei geöffneter Kupplung im Leerlauf (Motorleerlaufmoment) ermittelt wird. In einem nächsten Schritt wird dann die Kupplung bis zu einem vom vorherigen Adaptionszyklus stammenden Tastpunkt oder einen Startwert geschlossen und dabei das Motormoment ermittelt und sodann der zu bestimmende Tastpunkt bestimmt auf der Basis der Momentendifferenz aus dem ermittelten Motormoment und dem ermittelten Motorleerlaufmoment.

Nach einer Weiterbildung der Erfindung ist es dabei möglich, dass das Motorleerlaufmoment auch bezüglich Änderungen des Motorleerlaufmoments in die Tastpunktermittlung mit eingehen kann derart, dass der zu bestimmende Tastpunkt auf der Basis einer Momentendifferenz aus ermitteltem Motormoment und gewichtetem Motorleerlaufmoment bestimmt wird. Unter dem gewichteten Motorleerlaufmoment ist dabei beispielsweise ein Mittelwert aus zu mehreren unterschiedlichen Zeitpunkten ermittelten Werten des Motorleerlaufmoments zu verstehen. So kann beispielsweise einer ersten Messung des Motorteerlaufmoments eine Ansteuerung des Kupplungsaktuators folgen derart, dass ein Tastmoment von etwa 4 Nm kupplungsseitig anliegt, woraufhin dann die Kupplung wieder vollständig geöffnet wird, so dass eine zweite Messung des Motorleerlaufmoments bei vollständig geöffneter Kupplung erfolgt und aufgrund von Mittelwertsbildung zwischen den beiden gemessenen Werten des Motorleerlaufmoments eine Bestimmung des Motorleerlaufmoments erfolgt. Das derart gewichtete Motorleerlaufmoment wird dann von dem Motormoment im angenommenen neuen Tastpunkt abgezogen, so dass sich eine Momentendifferenz ergibt und auf Basis dieser Momentendifferenz der neu zu bestimmende Tastpunkt ermittelt wird.

Die Erfindung kann dadurch weitergebildet werden, dass zu Beginn der Tastpunktadaption vor dem vollständigen Öffnen der Kupplung das Kupplungsmoment für ein vorbestimmtes Zeitintervall weitgehend konstant gehalten wird, so dass ein Einregelvorgang des Antriebsmotors auf die Leerlaufdrehzahl möglich ist und dieser Zeitraum abgewartet wird.

In ähnlicher Weise ist es nach einer Weiterbildung der Erfindung vorgesehen, dass nach dem vollständigen Öffnen der Kupplung ein vorbestimmtes Zeitintervall abgewartet wird, das zur Stabilisierung der Drehzahl des Antriebsmotors erforderlich ist.

Schließlich ist es nach der Erfindung auch vorgesehen, dass beim Schließen der Kupplung zum Erreichen der Tastpunktsstellung der Kupplungsbetätigungsaktor die Kupplung zunächst schnell schließt, bis sich etwa der Nulldurchgang des Kupplungsmoments einstellt, so dass dieser Verfahrweg schnell durchlaufen wird und der Kupplungsbetätigungsaktor dann die Kupplung entlang einer flacheren Kupplungsmomentenrampe bis zum Erreichen des Tastpunkts verfährt.

Nach einer entsprechenden Weiterbildung der Erfindung ist es vorgesehen, dass nach dem Erreichen des Tastmoments für ein vorbestimmtes Zeitintervall Nachregelvorgänge des Kupplungsaktors abgewartet werden und dann das Motormoment zur Momentendifferenzbildung ermittelt wird.

Nach dieser Ermittlung des Motormoments kann die Kupplung zunächst entlang einer flachen Momentenkennlinie verschoben werden, also zunächst entlang einer flacheren Momentenlinie bis zu einem Moment von etwa Null (Bereitschaftspunkt) leicht geöffnet werden und dann schnell entlang einer steilen Momentenrampe vollständig geöffnet werden.

Die vorstehende Schilderung macht bereits deutlich, dass zur Ansteuerung des Kupplungsbetätigungsaktors unterschiedliche Regelparameter Verwendung finden können. Als Kupplungsbetätigungsaktor kann beispielsweise ein bürstenloser Elektromotor mit einer inkrementalen Wegmessung eingesetzt werden. Da aufgrund der inkrementalen Wegmessung keine Absolutwegmessung möglich ist, wird zur Bestimmung der Verfahrposition eines solchen Aktors mit einem Vertrauensmaß gearbeitet derart, dass das Vertrauensmaß in die inkrementale Wegmessung in Abhängigkeit von aufgetretenen Fehlerzuständen inkrementiert oder dekrementiert werden kann. Nach der Erfindung ist es daher vorgesehen, dass zur Ansteuerung des Kupplungsbetätigungsaktors Regelparameter verwendet werden, die in Abhängigkeit von dem Vertrauensmaß verändert werden. So ist es beispielsweise möglich, dass in die Regelparameter die Verfahrgeschwindigkeit und/oder die Beschleunigung und/oder die Ansteuerspannung des Kupplungsbetätigungsaktors einfließen.

Diese Regelparameter können dabei innerhalb vorbestimmter oberer und unterer Wertebereichsgrenzen verändert werden, so dass bei einem geringen Vertrauensmaß Regelparameter im Bereich der unteren Wertebereichsgrenzen in Verbindung mit einer niedrigen Dynamik der Verfahrbewegung des Kupplungsbetätigungsaktors verwendet werden und bei einem hohen Vertrauensmaß Regelparameter im Bereich der oberen Wertebereichsgrenzen zum Einsatz kommen, also aufgrund des hohen Vertrauensmaßes der Kupplungsbetätigungsaktor mit einer hohen Dynamik angesteuert wird, also beispielsweise hohen Beschleunigungswerten und einer hohen Verfahrgeschwindigkeit.

Wenn die Kupplung mittels einer hydraulischen Übertragungsstrecke angesteuert wird, dann ist es erforderlich, einen Druckausgleich in der Übertragungsstrecke zwischen dem Kupplungsaktor und der Kupplung durchzuführen, den so genannten Schnüffelvorgang. Da sich im Augenblick des Druckausgleichs eine nicht definierte Stellung bei der Kupplung einstellen könnte, muss diese beim Schnüffelvorgang vollständig geschlossen werden, was einem Aktorverfahrweg von Null entspricht. Da die der Kupplung nachgeschaltete Getriebeeingangswelle Lagerspiel aufweisen kann, ist der Kupplungsnullpunkt nicht fest, sondern hängt vom Antriebsstrangmoment während des Schnüffelvorgangs ab, dem so genannten Schnüffelmoment. Damit wird deutlich, dass der Nullabgleich des Tastpunkts nicht mehr absolut ist, sondern der sich einstellende Zustand von den im Antriebsstrang herrschenden Kräften abhängt, da den Antriebsstrang beaufschlagende Axialkräfte wiederum zu unterschiedlichen Auswirkungen des Axialspiels im Antriebsstrang führen können. Die so auftretenden Verschiebungen verändern die reale Kupplungskennlinie hinsichtlich des Tastpunkts und der Form. In Abhängigkeit von der jeweiligen Betriebssituation des Fahrzeuges liegen im Antriebsstrang des Fahrzeugs unterschiedliche Antriebsstrangmomente während des Schnüffelvorganges vor, so dass für die verschiedenen Schnüffelmomentenbereiche unterschiedliche Tastpunkte und Reibwerte benötigt werden. Die Erfindung schafft nun dadurch Abhilfe, dass die Kupplungskennlinie bzw. deren Adaptionsparameter in Abhängigkeit vom aktuellen Schnüffelmoment angepasst werden.

So ist nach einer ersten Alternative vorgesehen, dass die möglichen Antriebsstrangmomente während des Druckausgleichs in mehrere Bereiche (Schnüffelmomentenbereiche) mit zugehöriger Kupplungskennlinie unterteilt werden, die der Verschiebung und der Deformation Rechnung trägt. Diese Vorgehensweise weist den Vorteil auf, dass ansonsten für alle Schnüffelmomentenbereiche die gleichen Adaptionsparameter bezüglich Tastpunkt und Reibwert verwendet werden können.

Nach einer Alternative hierzu ist es auch möglich, eine Unterteilung in mehrere Schnüffelmömentenbereiche mit den jeweiligen Bereichen zugehörigen Adaptionsparametern (Tastpunkte, Reibwerte) vorzusehen. Diese Vorgehensweise besitzt den Vorteil, dass keine Kupplungskennlinien vorab erstellt werden müssen: Es sind aber Adaptionen auf Grund von Temperatureffekten und Verschleiß in den jeweiligen Schnüffelmomentenbereichen durchzuführen.

Nach einer weiteren Alternative ist es vorgesehen, das Antriebsstrangmoment während des Druckausgleichvorgangs in mehrere Schnüffelmomentenbereiche zu unterteilen mit jeweiligen zugehörigen Adaptionsparameteränderungen, das heißt also Tastpunktsänderungen und Reibwertänderungen, so dass für alle Schnüffelmomentenbereiche die gleichen Adaptionsparameter (Tastpunkt, Reibwert) verwendet werden können und die benötigten Adaptionsparameteränderungen bei der Inbetriebnahme erfasst und im Fahrbetrieb dann adaptiert werden können. Schließlich ist es auch möglich, statt fester Werte in den Schnüffelmomentenbereichen Momentenstützpunkte zu definieren, zwischen denen sich die dann verwendeten Werte kontinuierlich ändern.

Die nach der Erfindung vorgesehene Vorrichtung weist einen Kupplungsbetätigungsaktor auf und Mittel zur Erfassung des Antriebsmoments des Antriebsmotors sowie eine Auswerteeinrichtung, die das Motorleerlaufmoment und das Motormoment im Tastpunkt vergleicht und daraus den Verfahrweg des Kupplungsbetätigungsaktors zum Erreichen des neuen Tastpunkts ermitteln kann.

Die Erfindung wird im Folgenden anhand der Zeichnung näher erläutert. Diese zeigt in:
- Fig. 1: ein Diagramm des Tastmoments aufgetragen über der Zeit; und
- Fig. 2: ein Ablaufdiagramm zur Erläuterung des erfindungsgemäßen Verfahrens.

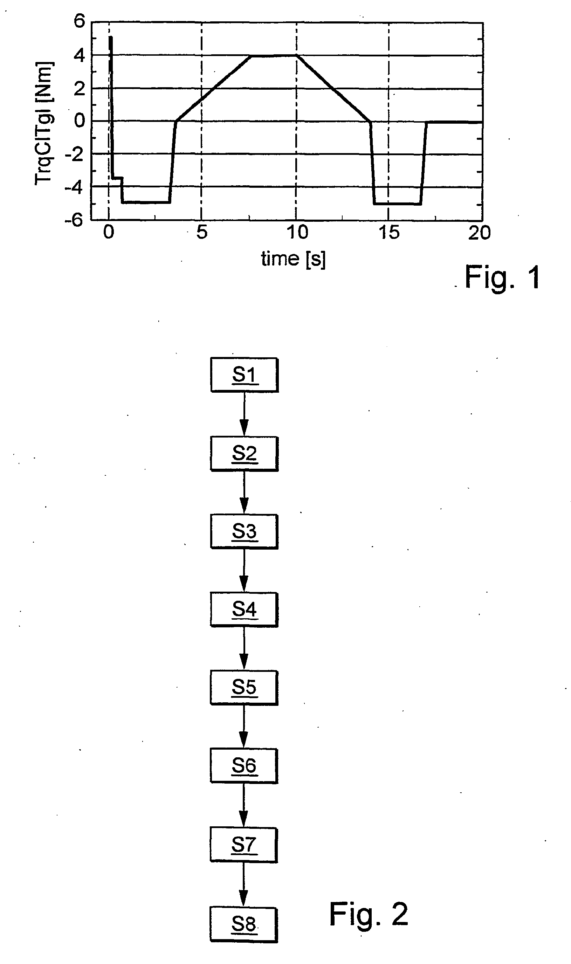

Zu Beginn des in Fig. 1 dargestellten Adaptionszyklus wird zur Bestimmung des Tastpunkts der Kupplungskennlinie bei eingelegtem Gang und betätigter Betriebsbremse zunächst die Kupplung geöffnet und dann das Motorleerlaufmoment ermittelt. In einem nächsten Schritt wird dann die Kupplung bis zu einem Tastmoment von beispielsweise 4 Nm geschlossen und dabei die Reaktion des Motors durch Messung des Motormoments überwacht. Fig. 1 zeigt nun ein zweites Mitteilungsintervall bei geöffneter Kupplung (negatives Kupplungsmoment), wobei während dieses Zeitintervalls das Motorleerlaufmoment nochmals ermittelt wird, so dass aus den beiden Zeitintervallen zur Ermittlung des Motorleerlaufmoments ein Mittelwert gebildet werden kann, der in die Ermittlung des Tastpunkts eingeht, wobei der Tastpunkt auf der Basis der Momentendifferenz aus ermitteltem Motormoment und Motorleerlaufmoment bestimmt wird.

Obwohl in Fig. 1 der Zeichnung das Zeitintervall, zu dem das Tastmoment von etwa 4 Nm anliegt, weitgehend mittig zu den beiden Zeitintervallen, zu denen das Motorleerlaufmoment bestimmt wird, liegt, können diese beiden Zeitintervalle auch in nicht-symmetrischer Weise zum Zeitintervall des Tastmoments gelegt werden, so dass zur Bestimmung des Motorleerlaufmoments auch Interpolationsverfahren herangezogen werden können.

Anhand von Fig. 2 der Zeichnung wird nachfolgend detaillierter auf das erfindungsgemäße Verfahren eingegangen.

Eine Tastpunktsadaption wird dann durchgeführt, wenn im Getriebe des Fahrzeugs eine Gangstufe eingelegt ist und das Gaspedal des Fahrzeugs nicht betätigt ist. Zudem ist als weitere Voraussetzung zu nennen, dass die Betriebsbremse des Fahrzeugs betätigt ist.

In einem ersten Schritt S1 wird die Kupplung mit einer hohen Verfahrgeschwindigkeit durch den Kupplungsbetätigungsaktor in Richtung Öffnen verschoben, so dass sich eine hohe Momentenveränderungsgeschwindigkeit am Kupplungsmoment und damit eine Momentenrampe mit hoher Steigung einstellt. Die Kupplung wird dabei weit geöffnet, befindet sich aber noch nicht am Öffnungsmaximum, es stellt sich ein negatives Kupplungsmoment ein.

In einem Schritt S2 wird das Kupplungsmoment für eine vorbestimmte Zeitdauer gehalten, um einen Einregelungsvorgang der Motordrehzahl auf die Leerlaufdrehzahl abzuwarten. In einem nächsten Schritt S3 wird die Kupplung vollständig geöffnet. Im nächsten Schritt S4 wird wieder ein vorbestimmtes Zeitintervall abgewartet, bis der Kupplungsbetätigungsaktor seine Endposition erreicht hat und sich die Drehzahl des Antriebsmotors wieder stabilisiert hat, da sich diese nach dem vollständigen Öffnen der Kupplung ändern kann. Während einer vorbestimmten Zeitdauer kann dann das Motorleerlaufmoment ermittelt werden. Im nächsten Schritt S5 wird der Kupplungsbetätigungsaktor so angesteuert, dass er die Kupplung mit einer zunächst steilen Momentenrampe verfährt und kurz vor Erreichen des Nulldurchgangs des Kupplungsmoments die Verfahrgeschwindigkeit der Kupplung zum Erreichen einer flachen Momentenrampe reduziert. Dann wird die Kupplung vom Kupplungsbetätigungsaktor mit der erreichten flachen Momentenrampe bis zum Tastmoment von beispielsweise 4 Nm in Richtung Schließen weiter verfahren.

In einem nächsten Schritt S6 wird die Kupplung auf diesem Tastmoment gehalten und zwar für eine vorbestimmte Zeitdauer, während der Nachregelvorgänge der Motorsteuerung zum Erreichen einer stabilen Motordrehzahl möglich sind. Während einer vorbestimmten Zeitdauer kann nun das vom Motor abgegebene Motormoment beispielsweise als Mittelwert während eines vorbestimmten Zeitintervalls bestimmt werden.

In einem nächsten Schritt S7 wird dann das Kupplungsmoment wieder mit einer flachen Momentenrampe bis zu einem Bereitschaftspunkt mit einem Moment von etwa Null verringert und in einem sich hieran anschließenden nächsten Schritt S8 die Kupplung mit einer steilen Momentenrampe vollständig geöffnet. Aus dem während des Schritts S4 ermittelten Motorleerlaufmoment und dem während des Schritts S6 ermittelten Motormoment kann nun ein Adaptionsinkrement bestimmt werden, um das der beim Schließen der Kupplung auf das Tastmoment von beispielsweise 4 Nm angenommene Tastpunkt verschoben werden kann.

Da der vorstehend beschriebene Verfahrensablauf immer dann durchgeführt werden kann, wenn die eingangs benannten Bedingungen erfüllt sind und damit häufig durchgeführt werden kann, kann eine tendenziell in eine Richtung verlaufende Tastpunktsänderung auch zur Veränderung eines längerfristig angenommenen Tastpunkts, der als angenommener Tastpunkt vorstehend auch bereits erläutert wurde, herangezogen werden.

Nach der Erfindung ist auch eine Vorrichtung vorgesehen zur Durchführung des vorstehend beschriebenen Verfahrens, wobei die Vorrichtung einen Kupplungsbetätigungsaktor aufweist und Mittel zur Erfassung des Antriebsmoments des Antriebsmotors zur Bestimmung des Motorleerlaufmoments und des während des Anliegens des Tastmoments abgegebenen Motormoments. Die Vorrichtung weist auch eine Auswerteeinrichtung auf, die das Motorleerlaufmoment und das Motormoment im Tastpunkt vergleicht und daraus den Verfahrweg des Kupplungsbetätigungsaktors zum Erreichung des neuen Tastpunkts ermittelt.

Hinsichtlich vorstehend im Einzelnen nicht näher erläuterter Merkmale der Erfindung wird im Übrigen ausdrücklich auf die Ansprüche und die Zeichnung verwiesen.

## Patentansprüche

1. Verfahren zur Ermittlung des Tastpunkts einer automatisierten Kupplung eines einen Antriebsmotor aufweisenden Fahrzeugs mit folgenden Schritten:
- es wird bei betätigter Fahrzeugbremse und eingelegter Gangstufe die Kupplung zunächst geöffnet
- es wird das Motormoment des Antriebsmotors bei geöffneter Kupplung im Leerlauf ermittelt
- die Kupplung wird bis zum vom vorherigen Adaptionszyklus stammenden Tastpunkt oder einem Startwert geschlossen und dabei das Motormoment ermittelt
- der zu bestimmende Tastpunkt wird bestimmt auf der Basis der Momentendifferenz aus ermitteltem Motormoment und Motorleerlaufmoment.

2. Verfahren nach Anspruch 1, **dadurch gekennzeichnet, dass** eine Änderung des Motorleerlaufmoments erfasst wird und der zu bestimmende Tastpunkt auf der Basis der Momentendifferenz aus ermitteltem Motormoment und gewichtetem Motorleerlaufmoment bestimmt wird.

3. Verfahren nach Anspruch 2, **dadurch gekennzeichnet, dass** das gewichtete Motorleerlaufmoment mittels linearer oder nichtlinearer Interpolation ermittelt wird.

4. Verfahren nach einem der Ansprüche 1 bis 3, **dadurch gekennzeichnet, dass** zu Beginn der Tastpunktsadaption vor dem vollständigen Öffnen der Kupplung das Kupplungsmoment für ein vorbestimmtes Zeitintervall weitgehend konstant gehalten wird derart, dass ein Einregelvorgang des Antriebsmotors auf die Leerlaufdrehzahl möglich ist.

5. Verfahren nach einem der vorstehenden Ansprüche, **dadurch gekennzeichnet, dass** nach dem vollständigen Öffnen der Kupplung ein vorbestimmtes Zeitintervall zur Stabilisierung der Drehzahl des Antriebsmotors abgewartet wird.

6. Verfahren nach einem der vorstehenden Ansprüche, **dadurch gekennzeichnet, dass** zu Beginn des Schritts A ein Kupplungsbetätigungsaktor die Kupplung bis kurz vor Erreichen des Nulldurchgangs des Kupplungsmoments mit einer steilen Momentenrampe verfährt und dann mit einer flachen Momentenrampe bis zum Erreichen des Tastmoments verfährt.

7. Verfahren nach Anspruch 6, **dadurch gekennzeichnet, dass** nach dem Erreichen des Tastmoments für ein vorbestimmtes Zeitintervall Nachregelvorgänge des Kupplungsaktors abgewartet werden und dann das Motormoment zur Momentendifferenzbildung ermittelt wird.

8. Verfahren nach einem der vorstehenden Ansprüche, **dadurch gekennzeichnet, dass** nach der Ermittlung des Motormoments die Kupplung zunächst mit einer flachen Momentenrampe und dann mit einer steilen Momentenrampe auf einen Wert des Kupplungsmoments von etwa Null verfahren wird.

9. Verfahren nach einem der vorstehenden Ansprüche, **dadurch gekennzeichnet, dass** das Adaptionsinkrement auf der Basis gemittelter Momentendifferenzen ermittelt wird.

10. Verfahren nach einem der Ansprüche 6 bis 9, **dadurch gekennzeichnet, dass** zur Ansteuerung des Kupplungsbetätigungsaktors Regelparameter verwendet werden, die in Abhängigkeit von einem Vertrauensmaß in die inkrementale Messung des Verfahrwegs des Kupplungsbetätigungsaktors verändert werden.

11. Verfahren nach Anspruch 10, **dadurch gekennzeichnet, dass** die Regelparameter die Verfahrgeschwindigkeit und/oder die Beschleunigung und/oder die Ansteuerspannung des Kupplungsbetätigungsaktors umfassen.

12. Verfahren nach Anspruch 10 oder 11, **dadurch gekennzeichnet, dass** die Regelparameter innerhalb vorbestimmter oberer und unterer Wertebereichsgrenzen verändert werden, wobei bei einem geringen Vertrauensmaß Regelparameter im Bereich der unteren Wertebereichsgrenzen (NIEDRIGE DYNAMIK) verwendet werden und bei einem hohen Vertrauensmaß Regelparameter im Bereich der oberen Wertebereichsgrenzen (HOHE DYNAMIK) verwendet werden.

13. Verfahren nach einem der vorstehenden Ansprüche, **dadurch gekennzeichnet, dass** die Tastpunktsadaption in Abhängigkeit des Antriebsstrangmoments beim Druckausgleichsvorgang einer hydraulischen Übertragungsstrecke zur Ansteuerung der Kupplung durchgeführt wird.

14. Vorrichtung zur Durchführung des Verfahrens nach einem der Ansprüche 1 bis 13 mit einem Kupplungsbetätigungsaktor und Mitteln zur Erfassung des Antriebsmoments des Antriebsmotors, **gekennzeichnet durch** eine Auswerteeinrichtung, die das Motorleerlaufmoment und das Motormoment im Tastpunkt vergleicht und daraus den Verfahrweg des Kupplungsbetätigungsaktors zum Erreichen des neuen Tastpunkts ermittelt.

## Claims

1. Method for determining the bite point of an automatic clutch of a vehicle having a drive motor, comprising the following steps:
- the clutch is firstly opened when the vehicle brake is activated and a gear speed is engaged,
- the engine torque of the drive motor is determined in the idling mode with the clutch opened,
- the clutch is closed up to the bite point, originating from the previous adaptation cycle, or a starting value, and in the process the engine torque is determined,
- the bite point to be determined is determined on the basis of the difference in torque between the engine torque which is determined and the engine idling torque.

2. Method according to Claim 1, **characterized in that** a change in the engine idling torque is sensed and the bite point to be determined is determined on the basis of the difference in torque between the engine torque which is determined and the weighted engine idling torque.

3. Method according to Claim 2, **characterized in that** the weighted engine idling torque is determined by means of linear or nonlinear interpolation.

4. Method according to one of Claims 1 to 3, **characterized in that** at the start of the adaptation of the bite point before the clutch opens completely, the clutch torque is kept largely constant for a predetermined time interval in such a way that an adjustment process of the drive engine to the idling speed is possible.

5. Method according to one of the preceding claims, **characterized in that** after the clutch opens completely the system waits for a predetermined time interval in order to stabilize the rotational speed of the drive engine.

6. Method according to one of the preceding claims, **characterized in that** at the start of the step A, a clutch activation actuator moves the clutch with a steep torque ramp to just before the point where the zero crossover of the clutch torque is reached, and then moves with a flat torque ramp to the point where the bite torque is reached.

7. Method according to Claim 6, **characterized in that** after the bite torque has been reached, the system waits for a predetermined time interval for subsequent adjustment processes of the clutch actuator, and the engine torque is then determined in order to form torque differences.

8. Method according to one of the preceding claims, **characterized in that** after the engine torque has been determined the clutch is firstly moved with a flat torque ramp and then with a steep torque ramp to a value of the clutch torque of approximately zero.

9. Method according to one of the preceding claims, **characterized in that** the adaptation increment is determined on the basis of averaged torque differences.

10. Method according to one of Claims 6 to 9, **characterized in that**, in order to actuate the clutch activation actuator, control parameters are used which are changed as a function of a confidence measure in the incremental measurement of the travel of the clutch activation actuator.

11. Method according to Claim 10, **characterized in that** the control parameters comprise the movement speed and/or the acceleration and/or the actuation voltage of the clutch actuation activator.

12. Method according to Claim 10 or 11, **characterized in that** the control parameters are changed within predetermined upper and lower value range limits, wherein, when there is a low confidence measure, control parameters in the region of the lower value range limits (LOW DYNAMICS) are used, and when there is a high confidence measure, control parameters in the region of the upper value range limits (HIGH DYNAMICS) are used.

13. Method according to one of the preceding claims, **characterized in that** the bite point adaptation is carried out as a function of the drive train torque during the pressure equalization process of a hydraulic transmission section for actuating the clutch.

14. Device for carrying out the method according to one of Claims 1 to 13, having a clutch actuation activator and means for sensing the drive torque of the drive engine, **characterized by** an evaluation device which compares the engine idling torque and the engine torque at the bite point and determines therefrom the travel of the clutch activation actuator in order to reach the new bite point.

## Revendications

1. Procédé de détermination du point de palpage de l'embrayage automatique d'un véhicule qui présente un moteur d'entraînement, lequel procédé présentant les étapes suivantes :
- le frein du véhicule étant actionné et le rapport de transmission engagé, l'embrayage est d'abord ouvert,
- lorsque l'embrayage est ouvert, le couple du moteur d'entraînement tournant au ralenti est déterminé,
- l'embrayage est fermé jusqu'au point de palpage qui provient du cycle d'adaptation précédent ou jusqu'à la valeur de démarrage, et le couple du moteur est déterminé,
- le point de palpage à déterminer est déterminé en fonction de la différence entre le couple du moteur qui a été déterminé et le couple du moteur tournant au ralenti.

2. Procédé selon la revendication 1, **caractérisé en ce qu'**une modification du couple du moteur tournant au ralenti est déterminée et **en ce que** le point de palpage à déterminer est déterminé en fonction de la différence entre le couple du moteur qui a été déterminé et un couple pondéré du moteur tournant au ralenti.

3. Procédé selon la revendication 2, **caractérisé en ce que** le couple pondéré du moteur tournant au ralenti est déterminé par interpolation linéaire ou interpolation non linéaire.

4. Procédé selon l'une des revendications 1 à 3, **caractérisé en ce qu'**au début de l'adaptation du point de palpage, avant l'ouverture complète de l'embrayage, le couple d'embrayage est maintenu largement constant pendant un intervalle de temps prédéterminé de manière à permettre une opération de réglage du moteur d'entraînement à son régime de ralenti.

5. Procédé selon l'une des revendications précédentes, **caractérisé en ce qu'**après l'ouverture complète de l'embrayage, on attend pendant un intervalle de temps prédéterminé la stabilisation du régime du moteur d'entraînement.

6. Procédé selon l'une des revendications précédentes, **caractérisé en ce qu'**au début de l'étape A, un actionneur d'embrayage déplace l'embrayage avec une forte pente de couple jusque peu avant l'atteinte du passage par zéro du couple d'embrayage et le déplace ensuite à une pente de couple peu accusée jusqu'à l'atteinte du couple de palpage.

7. Procédé selon la revendication 6, **caractérisé en ce qu'**après avoir atteint le couple de palpage, on attend pendant un intervalle de temps prédéterminé les opérations de régulation fine de l'actionneur d'embrayage, le couple du moteur étant ensuite déterminé par calcul de la différence entre les couples.

8. Procédé selon l'une des revendications précédentes, **caractérisé en ce qu'**après avoir déterminé le couple du moteur, l'embrayage est d'abord déplacé à une pente de couple peu accusée et est ensuite déplacé à une pente de couple accusée jusqu'à ce que le couple d'embrayage prenne une valeur sensiblement nulle.

9. Procédé selon l'une des revendications précédentes, **caractérisé en ce que** l'incrément d'adaptation est déterminé en fonction de la moyenne de la différence entre les couples.

10. Procédé selon l'une des revendications 6 à 9, **caractérisé en ce que** pour commander l'actionneur d'embrayage, on utilise des paramètres de régulation qui sont modifiés en fonction d'un niveau de confiance de la mesure des incréments du parcours de déplacement de l'actionneur d'embrayage.

11. Procédé selon la revendication 10, **caractérisé en ce que** les paramètres de régulation comprennent la vitesse de déplacement et/ou l'accélération et/ou la contrainte de commande de l'actionneur d'embrayage.

12. Procédé selon les revendications 10 ou 11, **caractérisé en ce que** les paramètres de régulation sont modifiés à l'intérieur de limites prédéterminées de valeurs supérieures et de valeurs inférieures, et lorsque le niveau de confiance est bas, on utilise des paramètres de régulation situés dans la plage de la limite inférieure des valeurs (BASSE DYNAMIQUE) tandis que lorsque le niveau de confiance est élevé, on utilise des paramètres de régulation situés dans la plage de la limite supérieure des valeurs (HAUTE DYNAMIQUE).

13. Procédé selon l'une des revendications précédentes, **caractérisé en ce que** l'adaptation du point de palpage est réalisée en fonction du couple du train d'entraînement lors d'une opération de compensation de pression d'un parcours hydraulique de transmission de commande de l'embrayage.

14. Dispositif en vue de la mise en oeuvre du procédé selon l'une des revendications 1 à 13, qui présente un actionneur d'embrayage et des moyens de détection du couple d'entraînement du moteur d'entraînement, **caractérisé par** un dispositif d'évaluation qui compare le couple du moteur tournant au ralenti et le couple du moteur au point de palpage et en détermine le parcours de déplacement de l'actionneur d'embrayage nécessaire pour atteindre le nouveau point de palpage.
